# EUROPEAN PATENT APPLICATION

(11) **EP 3 936 479 A1**
(43) Date of publication of application: **12.01.2022**
(21) Application number: 20766248.7
(22) Date of filing: 03.03.2020
(51) Int. Cl.: C01B 35/02, B22F 9/20, B22F 9/24, B82Y 30/00, B82Y 40/00, C01B 6/06

(54) **REDUCTION MATERIAL, COMPOSITE BODY AND REDUCTION METHOD**

(30) Priority: 07.03.2019 JP 2019042011
(71) Applicant: University of Tsukuba, Ibaraki 305-8577 (JP); Tokyo Institute of Technology, Tokyo 152-8550 (JP)
(72) Inventor: KONDO, Takahiro, Tsukuba-shi, Ibaraki 305-8577 (JP); FUJINO, Asahi, Tsukuba-shi, Ibaraki 305-8577 (JP); ISHIBIKI, Ryota, Tsukuba-shi, Ibaraki 305-8577 (JP); GOTO, Taiga, Tsukuba-shi, Ibaraki 305-8577 (JP); MIYAUCHI, Masahiro, Tokyo 152-8550 (JP); KAWAMURA, Reiya, Tokyo 152-8550 (JP); HIRABAYASHI, Toru, Tokyo 152-8550 (JP); ITO, Shin-ichi, Tokyo 152-8550 (JP)
(74) Representative: Eisenführ Speiser
(86) International application number: PCT/JP2020/008878
(87) International publication number: WO 2020/179779

(57) **Abstract**

A reducing material including a two-dimensional hydrogen boride-containing sheet having a two-dimensional network composed of (BH)ₙ (n ≥ 4).

A composite including a two-dimensional hydrogen boride-containing sheet having a two-dimensional network composed of (BH)ₙ (n ≥ 4) and a metal nanoparticle.

A reduction method including: a step of dispersing the reducing material according to any one of Claims 1 to 5 in an organic solvent to prepare a dispersion liquid containing the reducing material; and a step of reducing a metal ion having a redox potential which is given as a standard electrode potential of -0.26 V/SHE or higher by mixing the dispersion liquid with the metal ion.

## Description

### [Technical Field]

The present invention relates to a reducing material, a composite, and a reduction method using a reducing material.

Priority is claimed on Japanese Patent Application No. 2019-042011, filed March 7, 2019, the content of which is incorporated herein by reference.

### [Background Art]

Conventionally, reducing agents such as hydrazine have been used in the production of chemical products and the synthesis of pharmaceutical products. However, conventional reducing agents such as hydrazine have not been able to selectively reduce a metal ion of interest in accordance with the standard electrode potential of the metal ion.

Further, it has been known that a sheet-like substance produced by mixing water and magnesium diboride (MgB₂) can be used as a reducing agent (see, for example, Non-Patent Document 1). It is expected that the sheet-like substance described in Non-Patent Document 1 can selectively reduce metal ions.

### [Citation List]

### [Non-Patent Document]

[Non-Patent Document 1] Nanoscale, DOI: 10.1039/c8nr06283h (2018)

### [Summary of Invention]

### [Technical Problem]

However, since the standard electrode potential of the sheet-like substance described in Non-Patent Document 1 is about 0.16 V/SHE, the range of metal ions that can be reduced has been narrow.

The present invention has been made in view of the above circumstances, and has an object of providing a reducing material having a wider range of metal ions that can be reduced than conventional reducing agents and capable of selectively reducing metal ions; a composite; and a reduction method using a reducing material.

### [Solution to Problem]

[1] A reducing material including a two-dimensional hydrogen boride-containing sheet having a two-dimensional network composed of (BH)ₙ (n ≥ 4).
[2] The reducing material according to [1], having a standard electrode potential of -0.27 V/SHE or higher and -0.26 V/SHE or lower.
[3] The reducing material according to [1] or [2], wherein the aforementioned two-dimensional network forms a mesh-like shape in which boron atoms are arranged in a hexagonal ring shape and hexagons formed by the aforementioned boron atoms are connected to one another, and has a site in which two adjacent boron atoms among the aforementioned boron atoms are bound to the same hydrogen atom.
[4] The reducing material according to any one of [1] to [3], wherein a portion of the aforementioned two-dimensional hydrogen boride-containing sheet is terminated with an oxide.
[5] The reducing material according to any one of [1] to [4], wherein the aforementioned two-dimensional hydrogen boride-containing sheet has a length of 100 nm or more in at least one direction.
[6] A composite including a two-dimensional hydrogen boride-containing sheet having a two-dimensional network composed of (BH)ₙ (n ≥ 4) and a metal nanoparticle.
[7] A reduction method including: a step of dispersing the reducing material according to any one of [1] to [5] in an organic solvent to prepare a dispersion liquid containing the aforementioned reducing material; and a step of reducing a metal ion having a redox potential which is given as a standard electrode potential of -0.26 V/SHE or higher by mixing the aforementioned dispersion liquid with the metal ion.

### [Advantageous Effects of Invention]

According to the present invention, it is possible to provide a reducing material having a wider range of metal ions that can be reduced than conventional reducing agents and capable of selectively reducing metal ions; a composite; and a reduction method using a reducing material.

### [Brief Description of Drawings]

FIG. 1A is a schematic diagram showing a molecular structure of a two-dimensional hydrogen boride-containing sheet constituting a reducing material according to the present invention, and is a diagram showing an XY plane.
FIG. 1B is a schematic diagram showing the molecular structure of the two-dimensional hydrogen boride-containing sheet constituting the reducing material according to the present invention, and is a diagram showing a YZ plane.
FIG. 1C is a schematic diagram showing the molecular structure of the two-dimensional hydrogen boride-containing sheet constituting the reducing material according to the present invention, and is a diagram showing a ZX plane.
FIG. 2 is a schematic diagram showing a composite according to the present invention.
FIG. 3 is a diagram showing a measurement result of absorbance in Experimental Example 1.
FIG. 4 is a diagram showing a measurement result of absorbance in Experimental Example 2.
FIG. 5 is a diagram showing a measurement result of absorbance in Experimental Example 3.
FIG. 6 is a schematic diagram showing a method of Experimental Example 4.
FIG. 7 is a transmission electron microscope image of a sample on a copper grid in Experimental Example 4.
FIG. 8 is a transmission electron microscope image of a sample on a copper grid in Experimental Example 4.
FIG. 9 is a transmission electron microscope image of a sample on a copper grid in Experimental Example 4.
FIG. 10 is a transmission electron microscope image of a sample on a copper grid in Experimental Example 4.
FIG. 11 is a diagram showing a result of observing a sample on a copper grid with an energy dispersive X-ray analyzer in Experimental Example 4.
FIG. 12 is an image obtained by Fourier transformation of a black frame region of a cluster portion in the transmission electron microscope image shown in FIG. 9 in Experimental Example 4, and is a diagram showing that the cluster is a substance having a regular structure of a face-centered cubic structure.
FIG. 13 is a diagram showing a result of measuring a particle size distribution of particles present on the surface of a sample on a copper grid confirmed by a transmission electron microscope image in Experimental Example 4.
FIG. 14 is a photograph showing a state 12 minutes after each solution was prepared in Experimental Example 5.
FIG. 15 is a photograph showing a state 6 hours after each solution was prepared in Experimental Example 5.
FIG. 16 is a diagram showing a result of measuring absorbance of a solution (C) 6 hours after the preparation in Experimental Example 5.
FIG. 17 is a diagram showing a measurement result of absorbance in Experimental Example 6.
FIG. 18 is a diagram showing a measurement result of absorbance in Experimental Example 7.
FIG. 19 is a diagram showing a measurement result of absorbance in Experimental Example 8.

### [Description of Embodiments]

Embodiments of a reducing material, a composite, and a reduction method using a reducing material of the present invention will be described.

The present embodiments are specifically described for better understanding of the scope and gist of the invention, and do not limit the present invention unless otherwise specified.

### [Reducing material]

A reducing material according to the present embodiment is a sheet material including a two-dimensional hydrogen boride-containing sheet having a two-dimensional network composed of (BH)ₙ (n ≥ 4). That is, the two-dimensional hydrogen boride-containing sheet constituting the reducing material according to the present embodiment is a sheet having a two-dimensional network formed only from boron atoms (B) and hydrogen atoms (H), where these two types of atoms are present at a molar ratio of 1: 1.

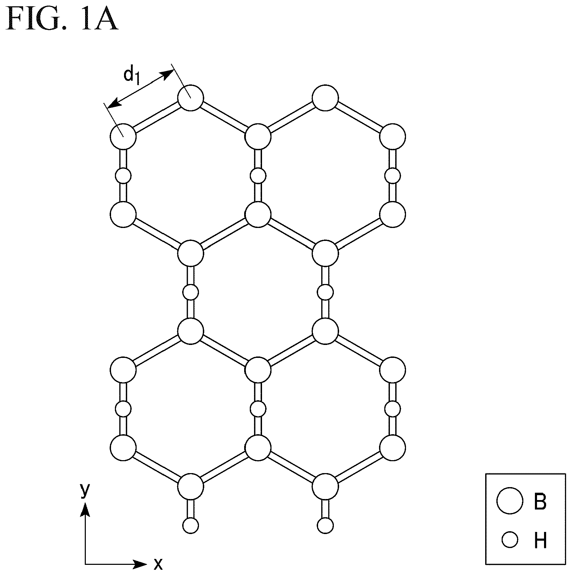

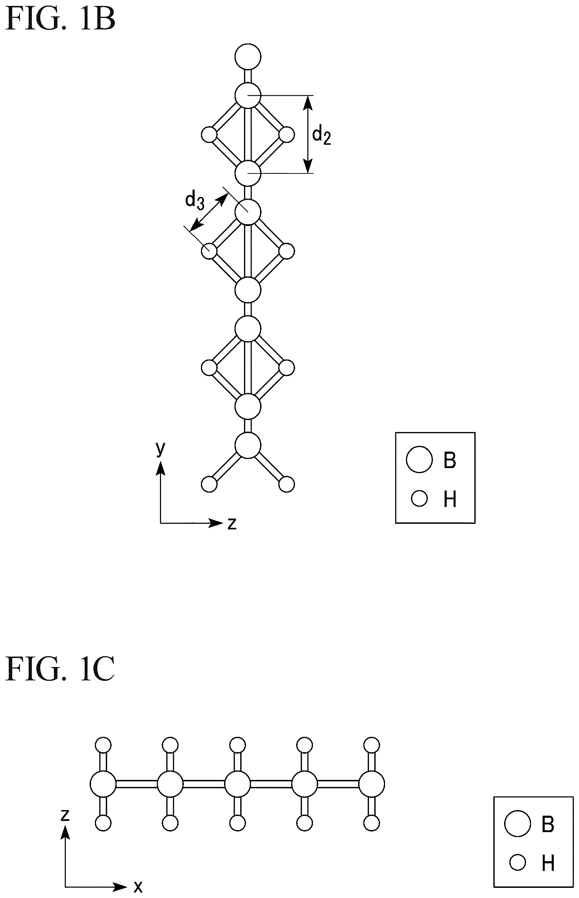

In the two-dimensional hydrogen boride-containing sheet according to the present embodiment, as shown in FIGS. 1A to 1C, the boron atoms (B) are arranged in a hexagonal ring shape like a benzene ring and are present at vertices of the hexagon, and the hexagons formed by the boron atoms (B) are connected to one another without gaps to form a mesh-like surface structure (two-dimensional network). Furthermore, as shown in FIGS. 1A to 1C, the two-dimensional hydrogen boride-containing sheet according to the present embodiment has a site in which two adjacent boron atoms among the boron atoms are bound to the same hydrogen atom (H). Although not shown in FIGS. 1A to 1C, a case where the hydrogen atom (H) has a bond with only one boron atom (B) is also included.

In the two-dimensional hydrogen boride-containing sheet according to the present embodiment, the hexagonal mesh-like shape formed by the boron atoms (B) refers to, for example, a honeycomb shape. Although the mesh-like sites are on the same plane in FIGS. 1A to 1C, a case where they are distorted is also included.

Such a two-dimensional hydrogen boride-containing sheet in the present embodiment is a thin film-like substance having a two-dimensional network composed of boron atoms (B) and hydrogen atoms (H). In addition, the two-dimensional hydrogen boride-containing sheet according to the present embodiment contains almost no metal atoms derived from a metal diboride used in the method for producing a two-dimensional boron compound-containing sheet according to the present embodiment, which will be described later, or other metal atoms.

In the two-dimensional hydrogen boride-containing sheet according to the present embodiment, the total number of boron atoms (B) and hydrogen atoms (H) forming the above-mentioned mesh-like surface structure is preferably 100 or more, more preferably 500 or more, and still more preferably 1,000 or more.

A bond distance d₁ between two adjacent boron atoms (B) as shown in FIG. 1A is from 0.155 nm to 0.190 nm. Further, a bond distance d₂ between two adjacent boron atoms (B) via one hydrogen atom (H) as shown in FIG. 1B is from 0.155 nm to 0.190 nm. Although not shown in the figures, a bond distance in a case where the hydrogen atom (H) is bonded to one boron atom (B) is from 0.155 nm to 0.190 nm. In addition, a bond distance d₃ between the adjacent boron atom (B) and the hydrogen atom (H) as shown in FIG. 1B is from 0.120 nm to 0.150 nm.

A thickness of the two-dimensional hydrogen boride-containing sheet according to the present embodiment is preferably from 0.23 nm to 10.0 nm, and more preferably from 0.23 nm to 0.50 nm.

In the two-dimensional hydrogen boride-containing sheet according to the present embodiment, a length in at least one direction (for example, a length in the X direction or Y direction in FIG. 1A) is preferably 100 nm or longer. In the two-dimensional hydrogen boride-containing sheet according to the present embodiment, if the length in at least one direction is 100 nm or longer, the two-dimensional hydrogen boride-containing sheet according to the present embodiment can be effectively used as an electronic material, a catalyst carrier material, a superconducting material, or the like.

A size (area) of the two-dimensional hydrogen boride-containing sheet according to the present embodiment is not particularly limited, and it can be formed into any size by the method for producing a two-dimensional boron compound-containing sheet according to the present embodiment as described later.

A portion of the two-dimensional hydrogen boride-containing sheet according to the present embodiment may be terminated with an oxide. That is, the two-dimensional hydrogen boride-containing sheet according to the present embodiment may have an oxide formed at the terminal of its molecular structure. Examples of the oxide forming the terminal of the molecular structure of the two-dimensional hydrogen boride-containing sheet according to the present embodiment include boric acid (B(OH)₃) and boron oxide (B₂O₃). A portion of the two-dimensional hydrogen boride-containing sheet according to the present embodiment forms a more stable molecular structure by being terminated with an oxide.

Such a two-dimensional hydrogen boride-containing sheet according to the present embodiment is a substance having a crystal structure. In addition, in the two-dimensional hydrogen boride-containing sheet according to the present embodiment, a strong bonding strength is exhibited between the boron atoms (B) forming the hexagonal ring and between the boron atom (B) and the hydrogen atom (H).

For this reason, even if a plurality of the two-dimensional hydrogen boride-containing sheets according to the present embodiment are laminated to form a crystal (aggregate) at the time of production, the crystal can be easily peeled off (cleaved) along a crystal plane similarly to graphite and separated (recovered) as single-layer two-dimensional sheets.

A reducing agent according to the present embodiment preferably has a standard electrode potential of -0.27 V/SHE or higher and -0.26 V/SHE or lower.

The standard electrode potential of the reducing agent according to the present embodiment is a value measured by a reduction test of a plurality of types of metal ions whose standard electrode potentials are known.

Since the reducing agent according to the present embodiment has a standard electrode potential of -0.27 V/SHE or higher and -0.26 V/SHE or lower, a metal ion having a redox potential which is given as a standard electrode potential of -0.26 V/SHE or higher can be reduced.

Examples of metal ions having a redox potential which is given as a standard electrode potential of -0.26 V/SHE or higher include nickel(II) ions (Ni²⁺, standard electrode potential = -0.25 V/SHE), tin(II) ions (Sn²⁺, standard electrode potential = -0.14 V/SHE), lead(II) ions (Pb²⁺, standard electrode potential = -0.13 V/SHE), iron(III) ions (Fe³⁺, standard electrode potential = +0.77 V/SHE), iron(II) ions (Fe²⁺, standard electrode potential = -0.04 V/SHE), hydrogen ions (H⁺, standard electrode potential = -0.00 V/SHE), copper(II) ions (Cu²⁺, standard electrode potential = +0.34 V/SHE), copper(I) ions (Cu⁺, standard electrode potential = +0.52 V/SHE), mercury(I) ions (Hg₂²⁺, standard electrode potential = +0.79 V/SHE), silver ions (Ag⁺, standard electrode potential = +0.80 V/SHE), mercury(II) ions (Hg²⁺, standard electrode potential = +0.86 V/SHE), palladium(II) ions (Pd²⁺, standard electrode potential = +0.99 V/SHE), iridium ions (Ir³⁺, standard electrode potential = +1.00 V/SHE), platinum ions (Pt²⁺, standard electrode potential = +1.19 V/SHE), gold(III) ions (Au³⁺, standard electrode potential = +1.50 V/SHE) and gold(I) ions (Au⁺, standard electrode potential = +1.68 V/SHE).

Since the reducing agent according to the present embodiment is composed of a two-dimensional hydrogen boride-containing sheet, the range of metal ions that can be reduced is wider than, for example, the above-mentioned conventional reducing agent such as hydrazine. Further, as described above, metal ions having a redox potential which is given as a standard electrode potential of -0.26 V/SHE or higher can be selectively reduced. A mixture that has not conventionally been possible to be selectively reduced unless being reduced after separation can be selectively reduced. That is, by reducing only the metal ions that can be reduced by the reducing agent according to the present embodiment and adhering them onto the surface of the reducing agent, the metal obtained by the reduction process can be separated and recovered.

Further, since the reducing agent according to the present embodiment reduces metal ions on a two-dimensional hydrogen boride-containing sheet, it is expected to be used as a carrier capable of highly dispersing the obtained metal by adhering it onto the two-dimensional hydrogen boride-containing sheet and uniformly controlling the size of the metal on the order of nanometers. In a conventional method of supporting a metal using a catalyst, after reducing metal ions by the catalyst in a solution, the obtained metal is supported on a carrier different from the catalyst, so that the metal aggregates, and it is difficult to control the size of the metal uniformly on the order of nanometers.

Further, by being applied to the surface of a substance in which metal ions having a redox potential which is given as a standard electrode potential nobler than - 0.25 V/SHE are present on the surface, since the reducing agent according to the present embodiment reduces the metal ions and binds to the surface of the substance by an electrical force (Coulomb force), a film can be formed on the surface of the substance.

### [Method for producing two-dimensional boron compound-containing sheet]

A method for producing a two-dimensional boron compound-containing sheet according to the present embodiment is a method including a step of mixing metal diboride having an MB₂-type structure (where M is at least one selected from the group consisting of Al, Mg, Ta, Zr, Re, Cr, Ti and V) with an ion exchange resin in which ions exchangeable with metal ions constituting the metal diboride are coordinated in a polar organic solvent (hereinafter referred to as "first step").

As the metal diboride having an MB₂-type structure, one having a hexagonal ring structure is used, and for example, aluminum diboride (AlB₂), magnesium diboride (MgB₂), tantalum diboride (TaB₂), zirconium diboride (ZrB₂), rhenium diboride (ReB₂), chromium diboride (CrB₂), titanium diboride (TiB₂) and vanadium diboride (VB₂) are used.

It is preferable to use magnesium diboride because ion exchange with an ion exchange resin can be easily performed in a polar organic solvent.

Although the ion exchange resin in which ions exchangeable with the metal ions constituting the metal diboride are coordinated is not particularly limited, for example, a polymer of styrene having a functional group in which ions exchangeable with metal ions constituting the metal diboride are coordinated (hereinafter referred to as "functional group α"), a polymer of divinylbenzene having the functional group α, a copolymer of styrene having the functional group α and divinylbenzene having the functional group α, and the like can be mentioned.

Examples of the functional group α include a sulfo group and a carboxyl group. Among these, a sulfo group is preferable from the viewpoint that ion exchange with metal ions constituting the metal diboride can be easily performed in a polar organic solvent.

The polar organic solvent is not particularly limited, and examples thereof include acetonitrile and N,N-dimethylformamide. Among these, acetonitrile is preferable from the viewpoint that no oxygen is contained.

In the first step, the metal diboride and the ion exchange resin are introduced into the polar organic solvent, and a mixed solution containing the polar organic solvent, the metal diboride and the ion exchange resin is stirred, so that sufficient contact is made between the metal diboride and the ion exchange resin. As a result, ion exchange occurs between metal ions constituting the metal diboride and ions of the functional group α of the ion exchange resin, so that a two-dimensional boron compound-containing sheet is produced which has a two-dimensional network formed of boron atoms and atoms derived from the functional group α of the ion exchange resin.

For example, if magnesium diboride is used as the metal diboride and an ion exchange resin having a sulfo group is used as the ion exchange resin, magnesium ions (Mg⁺) of the magnesium diboride are replaced with hydrogen ions (H⁺) of the sulfo group of the ion exchange resin, so that a two-dimensional hydrogen boride-containing sheet having a two-dimensional network composed of boron atoms (B) and hydrogen atoms (H) as described above is produced.

In the first step, it is preferable that an ion-exchange reaction between metal ions constituting the metal diboride and ions of the functional group α of the ion exchange resin be caused to proceed gently without applying ultrasonic waves or the like to the mixed solution.

When stirring the mixed solution, the temperature of the mixed solution is preferably from 0°C to 100°C, more preferably from 5°C to 50°C, and still more preferably from 5°C to 35°C.

Although a time for which the mixed solution is stirred is not particularly limited, and for example, it is preferably from 60 minutes to 4,400 minutes, more preferably from 30 minutes to 60 minutes, and still more preferably from 15 minutes to 30 minutes.

In addition, the first step is performed under an inert atmosphere composed of an inert gas such as nitrogen (N₂) and argon (Ar).

Subsequently, the mixed solution that has been stirred is filtered (second step).

A filtration method of the mixed solution is not particularly limited, and for example, methods such as natural filtration, vacuum filtration, pressure filtration, and centrifugal filtration are used. In addition, as a filter medium, for example, filter paper using cellulose as a base material, a membrane filter, or a filter plate or the like obtained by compression molding of cellulose, glass fiber and the like is used.

A solution containing a product separated and recovered from a precipitate through filtration is either naturally dried or dried by heating, to finally obtain only the product.

This product is a two-dimensional boron compound-containing sheet having a two-dimensional network formed by boron atoms and atoms derived from the functional group α of the ion exchange resin.

Examples of a method of analyzing the product obtained by the method for producing a two-dimensional boron compound-containing sheet according to the present embodiment include observation by X-ray photoelectron spectroscopy (XPS), observation by a transmission electron microscope (TEM), and observations by energy dispersive X-ray spectroscopy (EDS) and electron energy loss spectroscopy (EELS) performed in a transmission electron microscope.

In X-ray photoelectron spectroscopy (XPS), for example, the surface of a product is irradiated with X-rays using an X-ray photoelectron spectrometer (trade name: JPS9010TR) manufactured by JEOL Ltd., and the energy of photoelectrons generated at that time is measured, thereby analyzing constituent elements of the product and electronic states thereof. In this analysis, if the energy of photoelectrons attributable to a metal element constituting the metal diboride which is a raw material is hardly detected, and only the energy of photoelectrons attributable to boron and an element derived from the functional group α of the ion exchange resin described above is detected, it can be said that the product is composed only of boron and the element derived from the functional group α of the ion exchange resin described above. By analysis by X-ray photoelectron spectroscopy, if the energy of photoelectrons attributable to a metal element constituting the metal diboride which is a raw material is hardly detected, and only the energy of photoelectrons attributable to boron and hydrogen is detected, it can be said that the product is composed only of boron and hydrogen.

In the observation with a transmission electron microscope (TEM), for example, a shape (appearance) and the like of a product are analyzed by observing the product using a transmission electron microscope (trade name: JEM-2100F TEM/STEM) manufactured by JEOL Ltd. If a film-like (sheet-like) substance is observed in this analysis, it can be said that the product is a two-dimensional sheet-like substance. By performing energy dispersive X-ray spectroscopy (EDS) in a transmission electron microscope, it is possible to observe the presence or absence of a metal element at a TEM-observed site of the product. In this analysis, if the X-ray energy attributable to a metal element constituting the metal diboride which is a raw material is hardly detected, and a peak of the metal element (for example, Mg) does not appear, it can be said that the metal element does not exist. In addition, by performing electron energy loss spectroscopy (EELS) in a transmission electron microscope, constituent elements at a TEM-observed site of the product can be observed. In this analysis, if only the X-ray energy attributable to boron and an element derived from the functional group α of the ion exchange resin described above is detected, it can be said that the product is composed only of boron and the element derived from the functional group α of the ion exchange resin described above.

### [Composite]

A composite according to the present embodiment includes a two-dimensional hydrogen boride-containing sheet having a two-dimensional network composed of (BH)ₙ (n ≥ 4) and a metal nanoparticle.

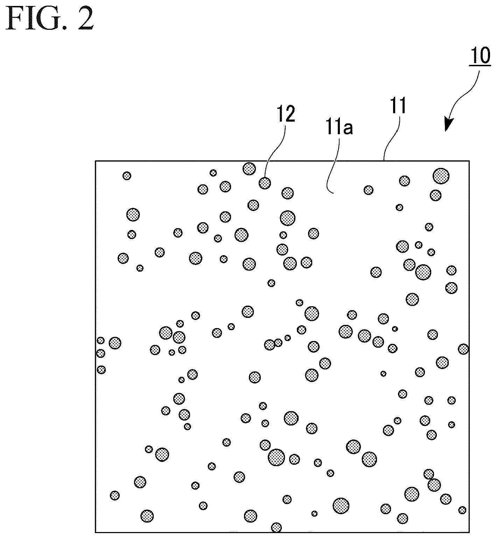

FIG. 2 is a schematic diagram showing the composite according to the present embodiment.

As shown in FIG. 2, a composite 10 according to the present embodiment includes a two-dimensional hydrogen boride-containing sheet 11 and a plurality of metal nanoparticles 12 present on one surface 11a (upper surface in FIG. 2) of the two-dimensional hydrogen boride-containing sheet 11 or inside the two-dimensional hydrogen boride-containing sheet 11. That is, in the composite 10 according to the present embodiment, the metal nanoparticles 12 are supported on the two-dimensional hydrogen boride-containing sheet 11.

The two-dimensional hydrogen boride-containing sheet 11 is a two-dimensional hydrogen boride-containing sheet constituting the above-mentioned reducing material.

The metal nanoparticles 12 are nanoparticles composed of metals such as nickel (Ni), tin (Sn), lead (Pb), iron (Fe), copper (Cu), mercury (Hg), silver (Ag), palladium (Pd), iridium ions (Ir), platinum ions (Pt) and gold (Au).

The metal nanoparticles 12 have a spherical shape, and the diameter thereof is preferably 1 nm or more and 20 nm or less, more preferably 1 nm or more and 10 nm or less, and still more preferably 1 nm or more and 6 nm or less.

The content of the metal nanoparticles 12 in the composite 10 according to the present embodiment is not particularly limited, and is appropriately adjusted in accordance with the use and the like of the composite 10.

The composite 10 according to the present embodiment can support the metal nanoparticles 12 with high dispersion on the two-dimensional hydrogen boride-containing sheet 11, and can therefore be suitably used for applications requiring a large surface area such as, for example, catalysts and batteries. Further, the composite 10 according to the present embodiment can support the metal nanoparticles 12 on the two-dimensional hydrogen boride-containing sheet 11, and can therefore be suitably applied to various applications using plasmon excitation in metals such as, for example, solar cells, photocatalysts, sensors and display elements.

When metal catalyst particles are supported on a carrier used for a catalyst or the like, the carrier, metal ions, and a homogeneous reducing agent are allowed to coexist in a solvent to support fine metal particles on the carrier surface. However, metals are also formed on a place other than the carrier surface, and the yield of supported metal fine particles was not high. On the other hand, since the two-dimensional hydrogen boride-containing sheet itself functions as a reducing agent, metal ions can be selectively reduced with a favorable yield. Therefore, according to the composite 10 according to the present embodiment, since the metal nanoparticles 12 can be supported on the surface of the two-dimensional hydrogen boride-containing sheet 11 having a large surface area with high dispersion, it can be expected to be applied to a highly catalytic reaction, a photoelectric conversion reaction, and the like.

### [Method for producing composite]

A method for producing a composite according to the present embodiment will be described.

A two-dimensional hydrogen boride-containing sheet is dissolved in a solvent such as acetonitrile or methanol to prepare a solution containing the two-dimensional hydrogen boride-containing sheet.

The solution containing the two-dimensional hydrogen boride-containing sheet is added dropwise onto the surface of a metal plate containing an oxide of a metal such as nickel (Ni), tin (Sn), lead (Pb), iron (Fe), copper (Cu), mercury (Hg), silver (Ag), palladium (Pd), iridium ions (Ir), platinum ions (Pt) and gold (Au).

Then, the metal oxide contained in the metal plate is reduced by the two-dimensional hydrogen boride-containing sheet, and as shown in FIG. 2, the metal nanoparticles 12 are generated on one surface 11a of the two-dimensional hydrogen boride-containing sheet 11 or inside the two-dimensional hydrogen boride-containing sheet 11.

As a result, the composite 10 according to the present embodiment is obtained.

### [Reduction method]

A reduction method according to the present embodiment includes a step of dispersing the reducing material according to the present embodiment in an organic solvent to prepare a dispersion liquid containing the reducing material (hereinafter, referred to as "step A"), and a step of reducing a metal ion having a redox potential which is given as a standard electrode potential of -0.26 V/SHE or higher by mixing the aforementioned dispersion liquid with the metal ion (hereinafter, referred to as "step B").

In step A, the organic solvent (dispersion medium) for dispersing the reducing material is not particularly limited as long as it is a polar organic solvent, and examples thereof include acetonitrile and methanol. Among these, acetonitrile and methanol are preferable from the viewpoint that they have low reactivity with metal ions.

In step A, although the content of the reducing material in the dispersion liquid is not particularly limited, for example, it is preferably 0.001 mol/L or more and 1.0 mol/L or less, and more preferably 0.01 mol/L or more and 0.1 mol/L or less.

In step B, the amount of metal ions added to the dispersion liquid prepared in step A is preferably 0.0001 mol/L or more and 0.1 mol/L or less, and more preferably 0.001 mol/L or more and 0.01 mol/L or less.

With respect to metal ions having a redox potential which is given as a standard electrode potential of -0.26 V/SHE or higher, the metal ions are added to the dispersion liquid in a form of oxides, chlorides and the like.

In step B, it is preferable that after adding metal ions to the dispersion liquid, a mixture thereof is stirred to bring the reducing material into contact with the metal ions in an organic solvent. As a result, the reduction of metal ions by the reducing material is promoted.

In step B, although the temperature of the above mixture when reducing the metal ions with the reducing material is not particularly limited, for example, it is preferably 0°C or higher and 100°C or lower, and more preferably 10°C or higher and 40°C or lower. When the temperature of the mixture is within the above range, the reduction of metal ions by the reducing material is further promoted.

According to the reduction method according to the present embodiment, since the reducing material according to the present embodiment is used, metal ions having a redox potential which is given as a standard electrode potential of -0.26 V/SHE or higher can be selectively reduced. A mixture that has not conventionally been possible to be selectively reduced unless being reduced after separation can be selectively reduced. That is, according to the reduction method according to the present embodiment, by reducing only the metal ions that can be reduced by the reducing agent according to the present embodiment and adhering them onto the surface of the reducing agent, the metal obtained by the reduction process can be separated and recovered.

### [Examples]

Hereinafter, the present invention will be described more specifically with reference to experimental examples. However, the present invention is not limited to the following experimental examples.

### [Experimental Example 1]

30 mL by volume of an ion exchange resin having a sulfo group (Amberlite (registered trademark) IR120B, manufactured by Organo Corporation) was added to acetonitrile while adding 500 mg of magnesium diboride (purity: 99%, manufactured by Rare Metallic Co., Ltd.), and the resulting mixture was stirred with a glass rod to prepare a mixed solution of magnesium diboride and the ion exchange resin.

After stirring the mixed solution at 25°C for 72 hours, the mixed solution was filtered through a membrane filter having a pore size of 1.0 µm, and the filtrate was recovered. Thereafter, the filtrate was dried at 80°C using a hot plate under a nitrogen atmosphere to obtain a two-dimensional hydrogen boride-containing sheet.

In a glass beaker, the obtained two-dimensional hydrogen boride-containing sheet was dissolved in acetonitrile to prepare an acetonitrile solution of the two-dimensional hydrogen boride-containing sheet with a concentration of 0.05 mol/L.

Copper(II) acetate monohydrate was added to this acetonitrile solution so as to achieve a concentration of 0.005 mol/L, and the absorbance of a mixed solution of the two-dimensional hydrogen boride-containing sheet and copper(II) acetate monohydrate was measured at predetermined time intervals.

The absorbance of the mixed solution was measured by a method in a dark place.

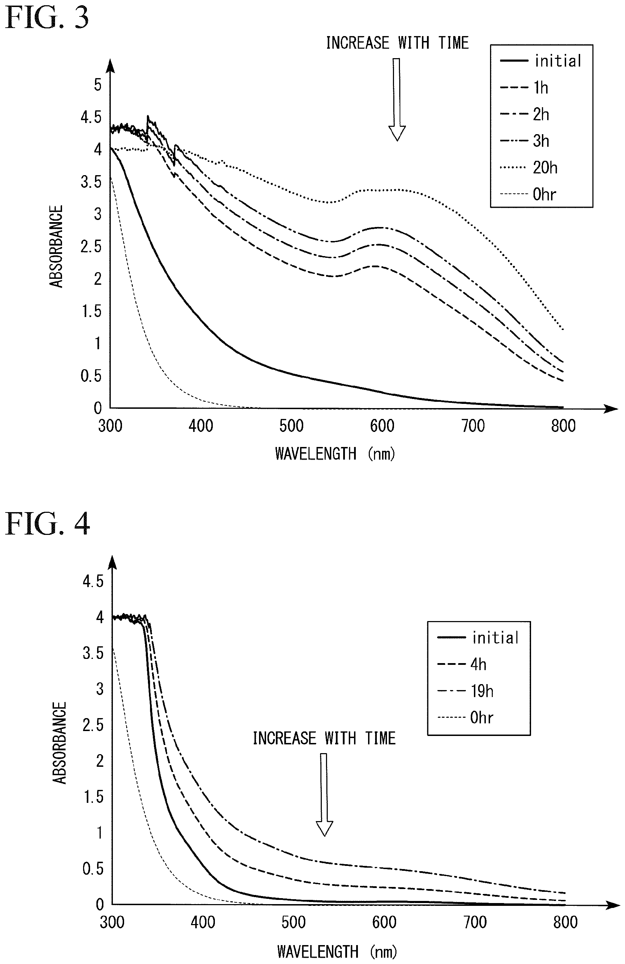

The results are shown in FIG. 3.

In FIG. 3, "initial" indicates an acetonitrile solution containing only copper(II) acetate monohydrate. "0h" indicates an acetonitrile solution containing only a two-dimensional hydrogen boride-containing sheet. "1h" indicates a mixed solution 1 hour after the addition of copper(II) acetate monohydrate to an acetonitrile solution containing a two-dimensional hydrogen boride-containing sheet. "2h" indicates a mixed solution 2 hours after the addition of copper(II) acetate monohydrate to an acetonitrile solution containing a two-dimensional hydrogen boride-containing sheet. "3h" indicates a mixed solution 3 hours after the addition of copper(II) acetate monohydrate to an acetonitrile solution containing a two-dimensional hydrogen boride-containing sheet. "20h" indicates a mixed solution 20 hours after the addition of copper(II) acetate monohydrate to an acetonitrile solution containing a two-dimensional hydrogen boride-containing sheet.

From the results shown in FIG. 3, since an increase in the absorption of light derived from the plasmon of copper (wavelength near 600 nm) was observed with the passage of time, it was found that copper ions (Cu²⁺) were reduced, and the amount of metallic copper (Cu) increased.

### [Experimental Example 2]

A two-dimensional hydrogen boride-containing sheet was obtained in the same manner as in Experimental Example 1.

An acetonitrile solution of a two-dimensional hydrogen boride-containing sheet with a concentration of 0.05 mol/L was prepared in the same manner as in Experimental Example 1.

Nickel(II) acetylacetonate was added to this acetonitrile solution so as to achieve a concentration of 0.005 mol/L, and the absorbance of a mixed solution of the two-dimensional hydrogen boride-containing sheet and nickel(II) acetylacetonate was measured in the same manner as in Experimental Example 1 at predetermined time intervals.

The results are shown in FIG. 4.

In FIG. 4, "initial" indicates an acetonitrile solution containing only nickel(II) acetylacetonate. "0h" indicates an acetonitrile solution containing only a two-dimensional hydrogen boride-containing sheet. "4h" indicates a mixed solution 4 hours after the addition of nickel(II) acetylacetonate to an acetonitrile solution containing a two-dimensional hydrogen boride-containing sheet. "19h" indicates a mixed solution 19 hours after the addition of nickel(II) acetylacetonate to an acetonitrile solution containing a two-dimensional hydrogen boride-containing sheet.

From the results shown in FIG. 4, since an increase in the absorption of light derived from the plasmon of nickel (a wide range of wavelengths from 400 nm to 800 nm) was observed with the passage of time, it was found that nickel ions (Ni²⁺) were reduced, and the amount of metallic nickel (Ni) increased.

### [Experimental Example 3]

A two-dimensional hydrogen boride-containing sheet was obtained in the same manner as in Experimental Example 1.

An acetonitrile solution of a two-dimensional hydrogen boride-containing sheet with a concentration of 0.025 mol/L was prepared in the same manner as in Experimental Example 1.

Acetylacetone iron(III) was added to this acetonitrile solution so as to achieve a concentration of 0.05 mol/L, and the absorbance of a mixed solution of the two-dimensional hydrogen boride-containing sheet and acetylacetone iron(III) was measured in the same manner as in Experimental Example 1 at predetermined time intervals.

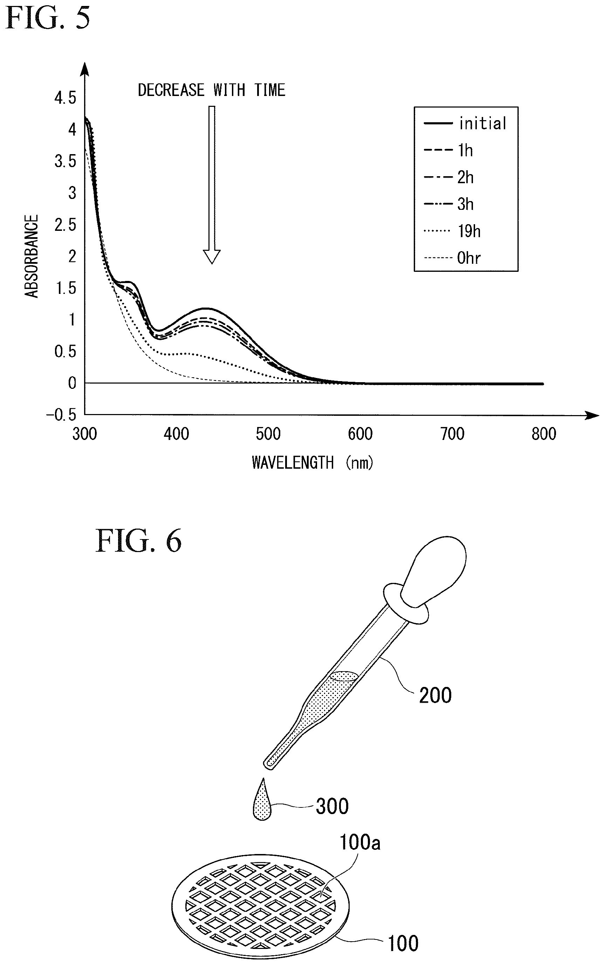

The results are shown in FIG. 5.

In FIG. 5, "initial" indicates an acetonitrile solution containing only acetylacetone iron(III). "0h" indicates an acetonitrile solution containing only a two-dimensional hydrogen boride-containing sheet. "1h" indicates a mixed solution 1 hour after the addition of acetylacetone iron(III) to an acetonitrile solution containing a two-dimensional hydrogen boride-containing sheet. "2h" indicates a mixed solution 2 hours after the addition of acetylacetone iron(III) to an acetonitrile solution containing a two-dimensional hydrogen boride-containing sheet. "3h" indicates a mixed solution 3 hours after the addition of acetylacetone iron(III) to an acetonitrile solution containing a two-dimensional hydrogen boride-containing sheet. "19h" indicates a mixed solution 19 hours after the addition of acetylacetone iron(III) to an acetonitrile solution containing a two-dimensional hydrogen boride-containing sheet.

From the results shown in FIG. 5, since a decrease in the absorbance of the yellow color of Fe³⁺ (near 450 nm) was observed with the passage of time, it was found that iron(III) ions (Fe³⁺) were reduced, and the amount of iron(II) ions (Fe²⁺) increased.

### [Experimental Example 4]

A two-dimensional hydrogen boride-containing sheet was obtained in the same manner as in Experimental Example 1.

The obtained two-dimensional hydrogen boride-containing sheet was dissolved in methanol to prepare a methanol solution of the two-dimensional hydrogen boride-containing sheet with a concentration of 0.05 mol/L.

The obtained methanol solution 300 was added dropwise, by a pipette 200, onto a surface 100a of a copper grid 100 containing copper oxide and having a shape as shown in FIG. 6.

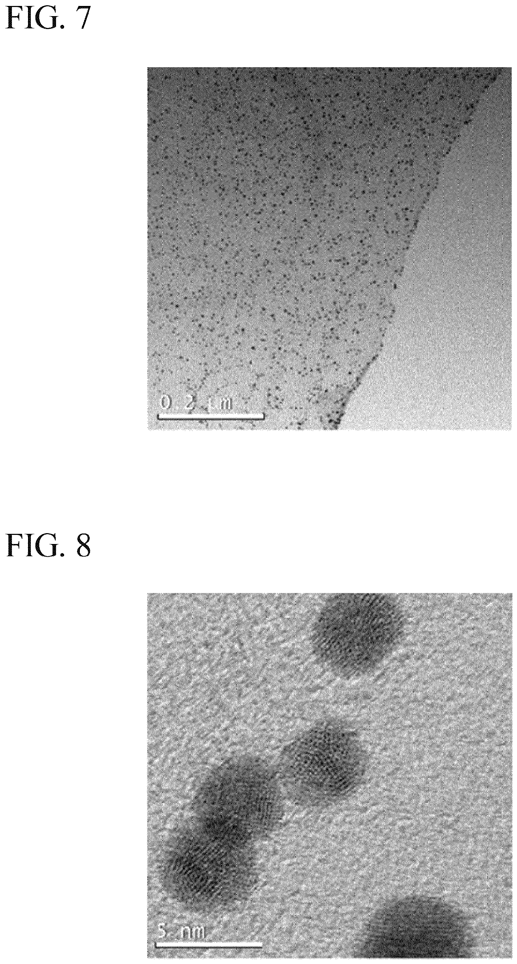

Approximately 1 hour after the dropwise addition of the methanol solution 300 onto the surface 100a of the copper grid 100, the surface 100a of the copper grid 100 was observed with a transmission electron microscope (trade name: JEM-2100F TEM/STEM). The results are shown in FIGS. 7 to 10.

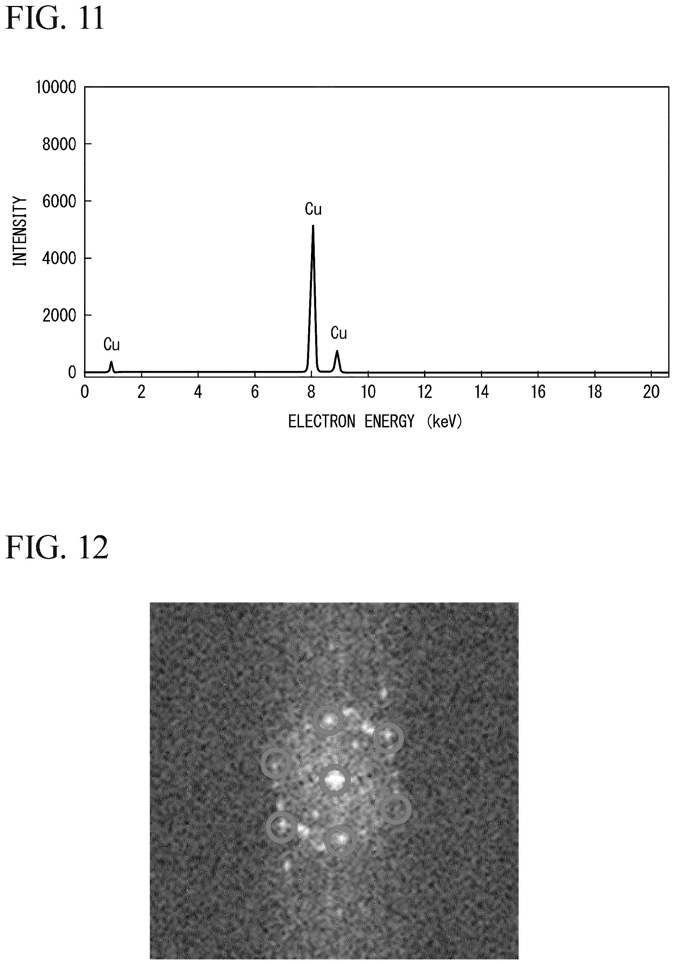

In addition, a sample on the surface 100a of the copper grid 100 was observed with an energy dispersive X-ray analyzer (a function attached to trade name: JEM-2100F TEM/STEM). The results are shown in FIG. 11.

In addition, a sample on the surface 100a of the copper grid 100 was observed with a transmission electron microscope (trade name: JEM-2100F TEM/STEM). The results are shown in FIG. 12.

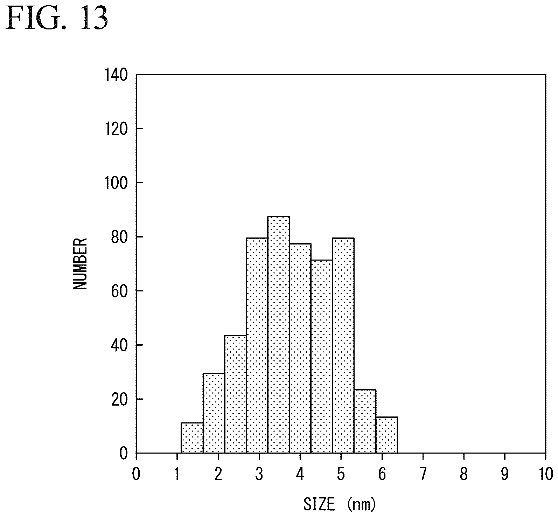

Furthermore, a particle size distribution of the particles present in the sample on the surface 100a of the copper grid 100 was measured with a transmission electron microscope (trade name: JEM-2100F TEM/STEM). The results are shown in FIG. 13.

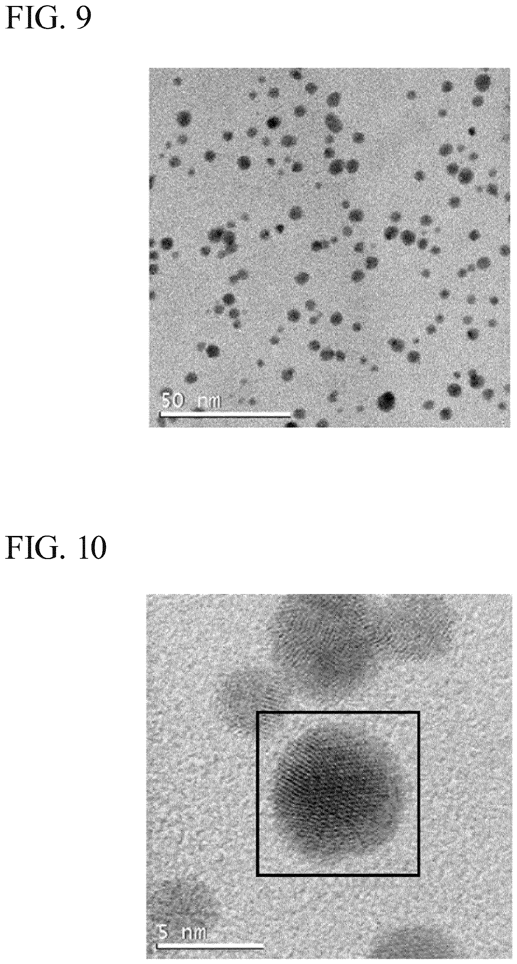

From the results shown in FIGS. 7 to 13, it was confirmed that metallic copper particles having an average particle diameter of 5 nm were generated in the sample on the surface 100a of the copper grid 100. It is thought that this is because the copper oxide contained in the copper grid 100 was reduced by the two-dimensional hydrogen boride-containing sheet to generate metallic copper particles on the sample. FIG. 11 is a result of energy dispersive X-ray analysis showing that the particles are copper. FIG. 12 is an image obtained as a result of Fourier transformation of a particle portion in FIG. 10, and it was possible to confirm a diffraction pattern of a face-centered cubic structure corresponding to copper. All of these results indicate that the observed particles are metallic copper. Further, from a histogram shown in FIG. 13, it was found that the size of the metallic copper particles was 1 nm or more and 6 nm or less in diameter.

### [Experimental Example 5]

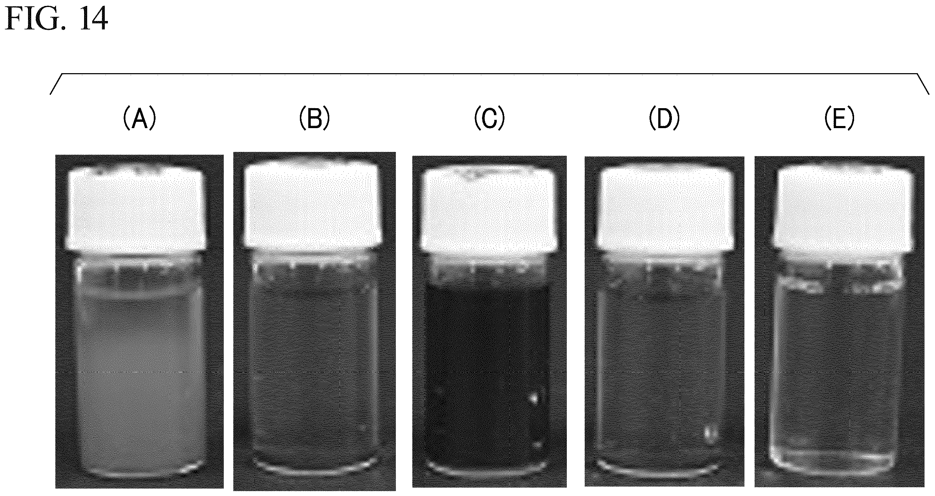

As shown in FIG. 14, a methanol solution of copper(I) oxide with a concentration of 0.084 mol/L (solution (A) shown in FIG. 14); a methanol solution of copper(II) oxide with a concentration of 0.15 mol/L (solution (B) shown in FIG. 14); a solution obtained by adding copper(I) oxide, so as to achieve a concentration of 0.084 mol/L, to a methanol solution of a two-dimensional hydrogen boride-containing sheet with a concentration of 0.34 mol/L (solution (C) shown in FIG. 14); a solution obtained by adding copper(II) oxide, so as to achieve a concentration of 0.15 mol/L, to a methanol solution of a two-dimensional hydrogen boride-containing sheet with a concentration of 0.34 mol/L (solution (D) shown in FIG. 14); and a methanol solution of a two-dimensional hydrogen boride-containing sheet with a concentration of 0.34 mol/L (solution (E) shown in FIG. 14) were prepared. FIG. 14 is a photograph showing a state 12 minutes after each of the above solutions was prepared. (A) Cu₂O: 0.084 mol/L; (B) CuO: 0.15 mol/L; (C) HB: 0.34 mol/L, Cu₂O: 0.084 mol/L; (D) HB: 0.34 mol/L, CuO: 0.15 mol/L; (E) HB: 0.34 mol/L

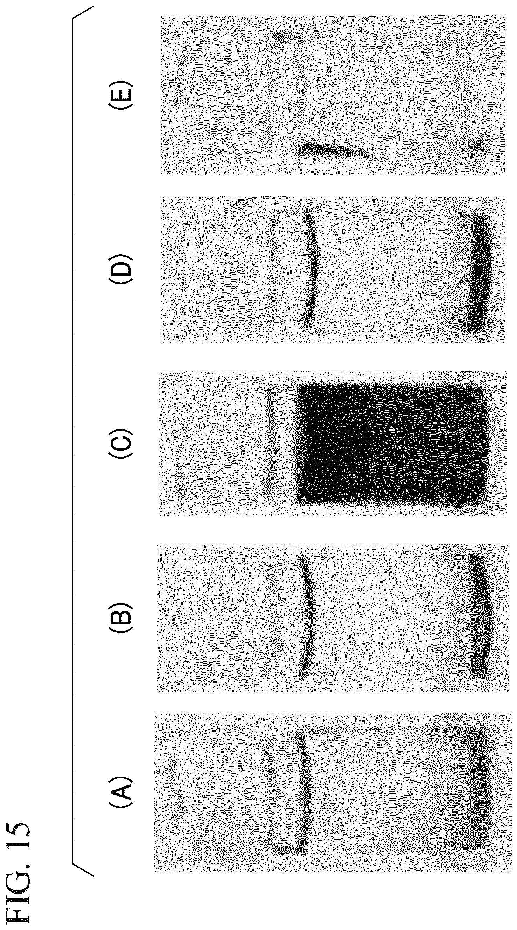

The state was observed 6 hours after each of the above solutions was prepared. The results are shown in FIG. 15. FIG. 15 is a photograph showing a state 6 hours after each of the above solutions was prepared.

From the results shown in FIGS. 14 and 15, it was observed that only the solution (C) was discolored.

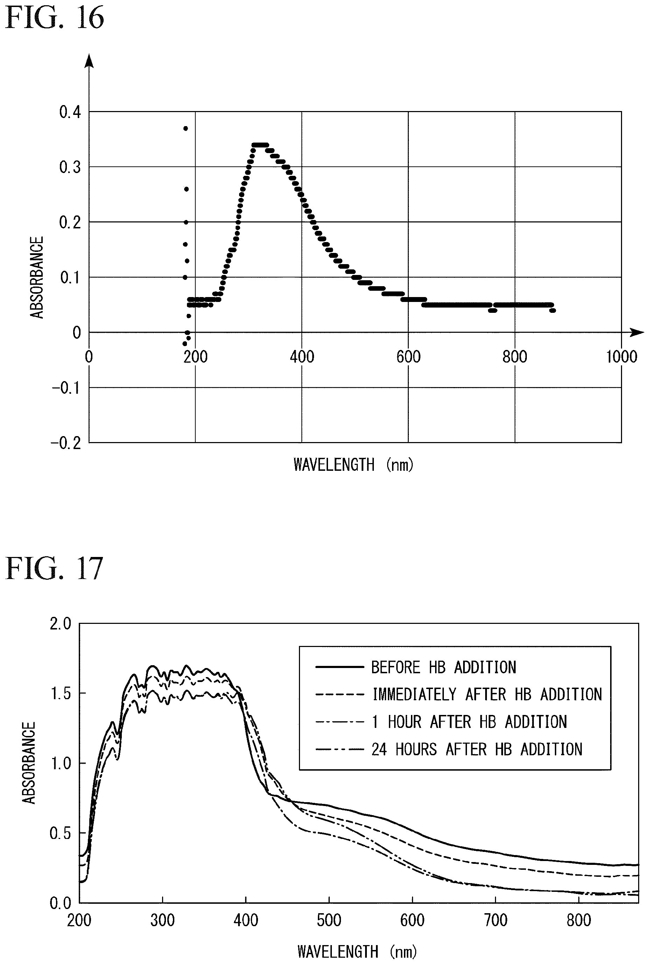

The absorbance of the solution (C) after 6 hours was measured in the same manner as in Experimental Example 1. The results are shown in FIG. 16.

From the results shown in FIG. 16, it was confirmed that a peak appeared at a wavelength near 320 nm and metallic copper was formed.

### [Experimental Example 6]

A two-dimensional hydrogen boride-containing sheet was obtained in the same manner as in Experimental Example 1.

An acetonitrile solution of a two-dimensional hydrogen boride-containing sheet with a concentration of 0.05 mol/L was prepared in the same manner as in Experimental Example 1.

Acetylacetone cobalt(II) was added to this acetonitrile solution so as to achieve a concentration of 0.005 mol/L, and the absorbance of a mixed solution of the two-dimensional hydrogen boride-containing sheet and acetylacetone cobalt(II) was measured in the same manner as in Experimental Example 1 at predetermined time intervals.

The results are shown in FIG. 17.

In FIG. 17, "before HB addition" indicates an acetonitrile solution containing only acetylacetone cobalt(II). "Immediately after HB addition" indicates a mixed solution immediately after the addition of the two-dimensional hydrogen boride-containing sheet (HB) to the acetonitrile solution containing only acetylacetone cobalt(II). "1 hour after HB addition" indicates a mixed solution 1 hour after the addition of the two-dimensional hydrogen boride-containing sheet (HB) to the acetonitrile solution containing only acetylacetone cobalt(II). "24 hours after HB addition" indicates a mixed solution 24 hours after the addition of the two-dimensional hydrogen boride-containing sheet (HB) to the acetonitrile solution containing only acetyl acetone cobalt(II).

From the results shown in FIG. 17, because the absorbance did not increase with the passage of time, it was found that cobalt(II) ions (Co²⁺) were not reduced.

### [Experimental Example 7]

A two-dimensional hydrogen boride-containing sheet was obtained in the same manner as in Experimental Example 1.

An acetonitrile solution of a two-dimensional hydrogen boride-containing sheet with a concentration of 0.05 mol/L was prepared in the same manner as in Experimental Example 1.

Acetylacetone nickel(II) was added to this acetonitrile solution so as to achieve a concentration of 0.005 mol/L, and the absorbance of a mixed solution of the two-dimensional hydrogen boride-containing sheet and acetylacetone nickel(II) was measured in the same manner as in Experimental Example 1 at predetermined time intervals.

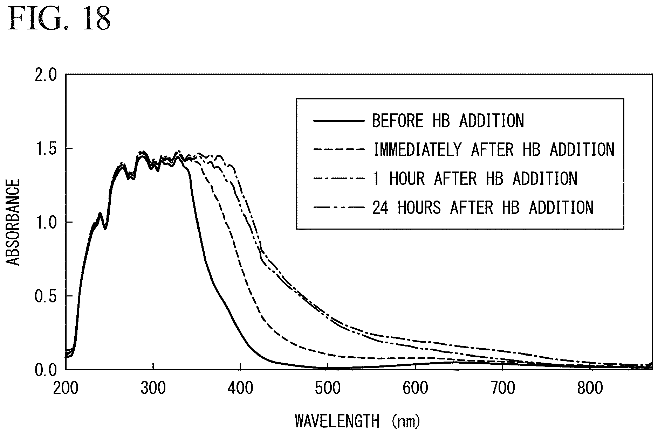

The results are shown in FIG. 18.

In FIG. 18, "before HB addition" indicates an acetonitrile solution containing only acetylacetone nickel(II). "Immediately after HB addition" indicates a mixed solution immediately after the addition of the two-dimensional hydrogen boride-containing sheet (HB) to the acetonitrile solution containing only acetylacetone nickel(II). "1 hour after HB addition" indicates a mixed solution 1 hour after the addition of the two-dimensional hydrogen boride-containing sheet (HB) to the acetonitrile solution containing only acetylacetone nickel(II). "24 hours after HB addition" indicates a mixed solution 24 hours after the addition of the two-dimensional hydrogen boride-containing sheet (HB) to the acetonitrile solution containing only acetyl acetone nickel(II).

From the results shown in FIG. 18, because the absorbance increased with the passage of time, it was found that nickel(II) ions (Ni²⁺) were reduced.

### [Experimental Example 8]

A two-dimensional hydrogen boride-containing sheet was obtained in the same manner as in Experimental Example 1.

An acetonitrile solution of a two-dimensional hydrogen boride-containing sheet with a concentration of 0.05 mol/L was prepared in the same manner as in Experimental Example 1.

Palladium(II) acetylacetonate was added to this acetonitrile solution so as to achieve a concentration of 0.005 mol/L, and the absorbance of a mixed solution of the two-dimensional hydrogen boride-containing sheet and palladium(II) acetylacetonate was measured in the same manner as in Experimental Example 1 at predetermined time intervals.

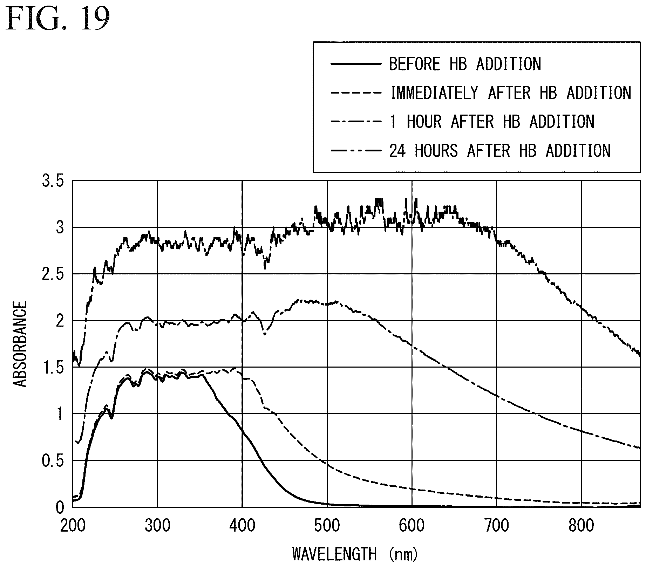

The results are shown in FIG. 19.

In FIG. 19, "before HB addition" indicates an acetonitrile solution containing only palladium(II) acetylacetonate. "Immediately after HB addition" indicates a mixed solution immediately after the addition of the two-dimensional hydrogen boride-containing sheet (HB) to the acetonitrile solution containing only palladium(II) acetylacetonate. "1 hour after HB addition" indicates a mixed solution 1 hour after the addition of the two-dimensional hydrogen boride-containing sheet (HB) to the acetonitrile solution containing only palladium(II) acetylacetonate. "24 hours after HB addition" indicates a mixed solution 24 hours after the addition of the two-dimensional hydrogen boride-containing sheet (HB) to the acetonitrile solution containing only palladium(II) acetylacetonate.

From the results shown in FIG. 19, because the absorbance increased with the passage of time, it was found that the palladium(II) ions (Pd²⁺) were reduced.

### [Industrial Applicability]

It is possible to provide a reducing material having a wider range of metal ions that can be reduced than conventional reducing agents and capable of selectively reducing metal ions; and a reduction method using the same.

### [Reference Signs List]

- 10:: Composite
- 11:: Two-dimensional hydrogen boride-containing sheet
- 11a:: One surface of two-dimensional hydrogen boride-containing sheet
- 12:: Metal nanoparticles
- 100:: Copper grid
- 100a:: Surface of copper grid
- 200:: Pipette
- 300:: Methanol solution

## Claims

1. A reducing material comprising a two-dimensional hydrogen boride-containing sheet having a two-dimensional network composed of (BH)ₙ (n ≥ 4).

2. The reducing material according to Claim 1, having a standard electrode potential of -0.27 V/SHE or higher and -0.26 V/SHE or lower.

3. The reducing material according to Claim 1 or 2,
wherein said two-dimensional network forms a mesh-like shape in which boron atoms are arranged in a hexagonal ring shape and hexagons formed by said boron atoms are connected to one another, and
has a site in which two adjacent boron atoms among said boron atoms are bound to the same hydrogen atom.

4. The reducing material according to any one of Claims 1 to 3, wherein a portion of said two-dimensional hydrogen boride-containing sheet is terminated with an oxide.

5. The reducing material according to any one of Claims 1 to 4, wherein said two-dimensional hydrogen boride-containing sheet has a length of 100 nm or more in at least one direction.

6. A composite comprising a two-dimensional hydrogen boride-containing sheet having a two-dimensional network composed of (BH)ₙ (n ≥ 4) and a metal nanoparticle.

7. A reduction method comprising:
a step of dispersing the reducing material according to any one of Claims 1 to 5 in an organic solvent to prepare a dispersion liquid containing said reducing material; and
a step of reducing a metal ion having a redox potential which is given as a standard electrode potential of -0.26 V/SHE or higher by mixing said dispersion liquid with the metal ion.
